# EUROPÄISCHE PATENTSCHRIFT

(11) **EP 3 621 822 B1**
(45) Veröffentlichungstag und Bekanntmachung des Hinweises auf die Patenterteilung: **27.01.2021**
(21) Anmeldenummer: 18707871.2
(22) Anmeldetag: 19.02.2018
(51) Int. Cl.: B60C 11/03, B60C 11/12, B60C 11/13

(54) **LAUFSTREIFENPROFIL EINES FAHRZEUGREIFENS**
TREAD PROFILE OF A VEHICLE TIRE
PROFIL DE BANDE DE ROULEMENT D'UN PNEU DE VÉHICULE

(30) Priorität: 09.05.2017 DE 102017207811
(43) Veröffentlichungstag der Anmeldung: 18.03.2020
(73) Patentinhaber: Continental Reifen Deutschland GmbH, 30165 Hannover (DE)
(72) Erfinder: RITTWEGER, Stefan, 30826 Garbsen (DE); NETTE, Daniel, 30890 Barsinghausen (DE); ROEGER, Bernhard, 30165 Hannover (DE)
(74) Vertreter: Finger, Karsten
(86) Internationale Anmeldenummer: PCT/EP2018/053989
(87) Internationale Veröffentlichungsnummer: WO 2018/206166

(56) Entgegenhaltungen:
- EP-A1- 2 881 265
- EP-A2- 1 170 152
- WO-A1-2016/008615
- WO-A1-2016/128084
- JP-A- 2003 260 909
- JP-A- 2007 223 493
- JP-A- 2013 216 271
- US-A- 6 102 093

## Beschreibung

Die Erfindung betrifft ein Laufstreifenprofil eines Fahrzeugreifens - insbesondere eines PKW-Fahrzeugreifens - mit wenigstens einem Profilband - insbesondere einer Profilblockreihe - mit durch Quer- oder Schrägrillen begrenzten und in Umfangsrichtung U hintereinander angeordneten, erhabenen Profilelementen, wobei in Profilelementen des Profilbandes über den Umfang des Reifens hinweg hintereinander angeordnete, quer verlaufende Feineinschnitte ausgebildet sind, die jeweils von zwei Feineinschnittswänden begrenzt werden, mit Feineinschnittswänden, die im Übergang zu der das Profilband in radialer Richtung R nach außen begrenzenden Oberfläche mit einer Fase ausgebildet sind, wobei das Profilband unter Variation der Pitchlängen des Laufstreifenprofils mit Profilelementen unterschiedlicher, in Umfangsrichtung U gemessenen Blocklängen ausgebildet sind.

Es ist bekannt, Laufstreifenprofile zur Erzielung eines besseren Geräuschbildes mit über den Umfang des Laufstreifens hinweg unterschiedlich lang ausgebildeten Profilabschnitten zu versehen den so genannten Pitchlängen. Dabei sind die Profilblockreihen mit ihren in Umfangsrichtung hintereinander angeordneten Profilblockelementen mit entsprechend unterschiedlichen Blocklängen ausgebildet.

Es ist auch bekannt, die Profilblockelemente beispielsweise zur Erzielung besserer Nassgriffeigenschaften mit Feineinschnitten auszubilden, die sich in Querrichtung der Profilblockelemente erstrecken. Dabei wird üblicherweise der unterschiedlichen Länge der Profilblockelemente entsprechend auch eine unterschiedliche Anzahl von Feineinschnitten in den Profilblockelementen ausgebildet, so dass in längeren Blockelementen eine höhere Zahl von Feineinschnitten ausgebildet ist als in kürzeren.

Um die Trockenbremseigenschaften der Profilblockelemente zu verbessern ist es auch bekannt, die die Feineinschnitte jeweils begrenzenden Feineinschnittswände an ihrem Übergang zur radial äußeren Oberfläche mit Fasen auszubilden. Hierdurch kann ein Einrollen des Übergangs beim Bremsen vermieden und die Kraftübertragung verbessert werden.

Dabei werden üblicherweise die in den kürzeren Profilblockelementen ausgebildeten Feineinschnitte und die in den längeren Profilblockelementen ausgebildeten Feineinschnitte jeweils gleichermaßen mit Fasen ausgebildet, wodurch in den längere Profilblockelementen mit der erhöhten Zahl der Feineinschnitte gleichermaßen gegenüber den kürzeren Profilblockelementen eine erhöhte Anzahl von Fasen mitausgebildet ist. Dabei kann zwar durch die Verpitchung des Profils ein positiver Effekt auf die Geräuschentstehung erzielt und durch die größere Zahl von Feineinschnitten in den längeren Blockelementen auch eine Verbesserung des Nassgriffs umgesetzt werden. Die Nutzung der Fasen in Feineinschnitten der Profilblockelemente ermöglicht auch positive Einflüsse auf das Trockenbremsverhalten. Die bei derartigen herkömmlichen Reifen üblicherweise jedoch mit der Erhöhung der Feineinschnitte erfolgte analoge Erhöhung der vollständigen Ausbildung der mit Fasen ausgebildeten Feineinschnitte an den längeren Blockelementen führt jedoch durch erhöhte Fasenzahl in den längeren Profilblockelementen zu einer Erhöhung der Geräuschanregung beim Abrollen der längeren Profilblockelemente, so dass der durch die Pitch-Folgenvariation gewünschte Effekt der Geräuschreduktion teilweise wieder unerwünscht reduziert wird.

**Aus der** WO 2016/008615 A1 **ist ein Laufstreifenprofil gemäß den Merkmalen des Oberbegriffs von Anspruch 1 bekannt.**

Daher liegt der Erfindung die Aufgabe zugrunde, bei einem derartigen Laufstreifenprofil unter der Nutzung der verpitchten Ausbildung mit unterschiedlich lang gewählten Blockelementen mit unterschiedlicher Zahl von Feineinschnitten und mit Fasen an Feineinschnittswänden die Vorteile hinsichtlich guter Nass- und Trockengriffeigenschaften zu nutzen und dabei die Geräuschbildung weiter zu reduzieren.

Die Aufgabe wird erfindungsgemäß durch die Ausbildung eines Laufstreifenprofils eines Fahrzeugreifens - insbesondere eines PKW-Fahrzeugreifens - mit wenigstens einem Profilband - insbesondere einer Profilblockreihe - mit durch Quer- oder Schrägrillen begrenzten und in Umfangsrichtung U hintereinander angeordneten, erhabenen Profilelementen gelöst, wobei in Profilelementen des Profilbandes über den Umfang des Reifens hinweg hintereinander angeordnete, quer verlaufende Feineinschnitte ausgebildet sind, die jeweils von zwei Feineinschnittswänden begrenzt werden, mit Feineinschnittswänden, die im Übergang zu der das Profilband in radialer Richtung R nach außen begrenzenden Oberfläche mit einer Fase ausgebildet sind, wobei das Profilband unter Variation der Pitchlängen des Laufstreifenprofils mit Profilelementen unterschiedlicher in Umfangsrichtung U gemessenen Blocklängen ausgebildet sind, wobei in Profilelementen größerer Blocklänge eine größere Zahl derartiger Feineinschnitte ausgebildet sind als in Profilelementen kleinerer Blocklänge, und wobei die Profilelemente des Profilbandes unabhängig von ihrer Blocklänge jeweils mit einer gleichen Zahl von Feineinschnittswänden ausgebildet sind, an denen eine Fase ausgebildet ist.

Hierdurch wird es ermöglicht, dass die Profilblockelemente weiterhin unter Nutzung einer Pitchfolgen-Variation mit unterschiedlicher Länge ausgebildet sind, so dass deren positive Wirkung auf die Geräuschbildung weiter genutzt werden kann. Dabei sind über den Umfang des Laufstreifens hinweg ausreichend quer verlaufende Feineinschnitte in den Profilelementen ausgebildet, wobei sie trotz unterschiedlicher Längen der Profilelemente aufgrund ihrer erhöhten Anzahl in längeren Profilelementen über den Umfang hinweg gleichmäßig gute Griffkanten zur Erzielung eines guten Nassgriffes bereitstellen. Die Feineinschnitte sind jeweils mit Fasen ausgebildet, so dass Trockenbremseigenschaften über den Umfang des Laufstreifenprofils im Bereich aller Profilblockelemente weiterhin durch die Fasenausbildung begünstigt werden. Allerdings ist die Zahl der Fasen trotz unterschiedlicher Profilblocklänge und trotz unterschiedlicher Zahl der Feineinschnitte in den Profilblockelementen unterschiedlicher Länge gleich gewählt, so dass innerhalb der Profilblockelemente keine verstärkenden Geräuschbildungseffekte durch Fasenausbildung erzielt werden. Da Feineinschnitte beim Durchlaufen des Latsches selbst nur geringere Anregung als die Fasen verursachen, kann durch diese Ausbildung somit die Energie der Anregung zu den jeweiligen Pitchen ausgeglichener ermöglicht werden. Es entstehen keine unerwünschten Frequenzen und die berechnete Pitchfolge ist effizienter in der Vermeidung von Geräusch.

Somit kann durch diese Ausbildung in einfacher Weise unter Nutzung der vorteilhaften Effekte der Pitchfolgen-Variation, der höheren Anzahl an Feineinschnitten bei längeren Profilelementen gegenüber der Zahl von kürzeren Profilelementen und unter Nutzung von Fasen an Feineinschnitten gute Nassbremseigenschaften, gute Trockenbremseigenschaften unter verbesserter Ausnutzung der durch die Pitchfolgen-Variation ermöglichten GeräuschReduktion umgesetzt werden.

Besonders vorteilhaft ist die Ausbildung eines Fahrzeugreifens gemäß den Merkmalen von Anspruch 2, wobei das Profilband eine Profilblockreihe - insbesondere eine Schulterprofilblockreihe - ist und die durch die Quer- oder Schrägrillen begrenzten Profilelemente Profilblockelemente sind. Die Ausbildung ist besonders vorteilhaft. Gerade mit Ausbildung als Schulterprofilblockreihe sind die Vorteile besonders wirksam, da dort die Ausbildung in dem besonders geräuschempfindlichen Reifenabschnitt auch zum Tragen kommt.

Besonders vorteilhaft ist die Ausbildung eines Fahrzeugreifens gemäß den Merkmalen von Anspruch 3, wobei das Profilband mit Profilelementen kürzerer Blocklänge, in denen jeweils ein einziger derartiger Feineinschnitt ausgebildet ist, und mit Profilelementen größerer Blocklänge, in denen jeweils zwei derartige Feineinschnitte ausgebildet sind, wobei bei dem Feineinschnitt der kürzeren Profilelemente jeweils an beiden Feineinschnittswänden eine Fase und bei den beiden Feineinschnitten der längeren Profilelemente jeweils an einer Feineinschnittswand eine Fase und die andere Feineinschnittswand fasenfrei ausgebildet ist.

Besonders vorteilhaft ist die Ausbildung eines Fahrzeugreifens gemäß den Merkmalen von Anspruch 4, wobei bei dem einen der beiden Feineinschnitten der längeren Profilelemente, eine Feineinschnittwand mit einer Fase ausgebildet ist, die den Feineinschnitt zur einen Umfangsrichtung U hin begrenzt, und bei dem anderen Feineinschnitt, diejenige Feineinschnittswand mit einer Fase ausgebildet ist, die den Feineinschnitt in die entgegengesetzte Umfangsrichtung U hin begrenzt. Dies ermöglicht in einfacher Weise die optimale Nachbildung der Fasenordnung des nur mit einem Feineinschnitt ausgebildeten kurzen Profilelements an dem mit zwei Feineinschnitten ausgebildeten längeren Profilelementes.

Besonders vorteilhaft ist die Ausbildung eines Fahrzeugreifens gemäß den Merkmalen von Anspruch 5, wobei die beiden mit Fase ausgebildeten Feineinschnittswände das Paar von Feineinschnitten jeweils in Umfangsrichtung nach außen hin begrenzen, so dass die beiden fasenfreien Feineinschnittswände der beiden Feineinschnitte zwischen den beiden mit Fase ausgebildeten Feineinschnittwänden positioniert sind. Dies ermöglicht in einfacher Weise die optimale Nachbildung der Fasenordnung des nur mit einem Feineinschnitt ausgebildeten kurzen Profilelements an dem mit zwei Feineinschnitten ausgebildeten längeren Profilelementes.

Besonders vorteilhaft ist die Ausbildung eines Fahrzeugreifens gemäß den Merkmalen von Anspruch 6, wobei sowohl in den kurzen Profilelementen als auch in den langen Profilelementen die in dem jeweiligen Profilelement ausgebildeten Fasen der Feineinschnittswände jeweils mit unterschiedlicher, in axialer Richtung A gemessenen Erstreckungslänge ausgebildet sind.

Besonders vorteilhaft ist die Ausbildung eines Fahrzeugreifens gemäß den Merkmalen von Anspruch 7, wobei die Feineinschnitte innerhalb der Bodenaufstandsbreite T_{A} des Fahrzeugreifens sich jeweils ausgehend von einer das Profilband begrenzenden Umfangsrille in axialer Richtung durch das Profilelement hindurch erstrecken, wobei die Fase einer Feineinschnittswand jeweils ausgehend von dieser Umfangsrille längs der Erstreckung des jeweiligen Feineinschnittes erstreckt ausgebildet ist und mit Abstand zu dem von dieser Umfangsrille wegweisenden Erstreckungsende des Feineinschnitts endet. Dies ermöglicht zusätzlich eine Verbesserung der Drainage von Wasser aus dem Bereich der Profilelemente bei nassen Straßen.

Die Erfindung wird im Folgenden an Hand der in den Figuren 1 bis 4 dargestellten Ausführungsbeispiele näher erläutert. Hierin zeigen
- Fig.1: einen Umfangsabschnitt eines Laufstreifenprofils eines Pkw-Fahrzeugluftreifens in Draufsicht,
- Fig.2: das Laufstreifenprofil von Fig.1 in Schnittdarstellung gemäß Schnitt II-II von Fig.1,
- Fig.3: das Laufstreifenprofil von Fig.1 in Schnittdarstellung gemäß Schnitt III-III von Fig.1 und
- Fig.4: Laufstreifenprofil von Fig.1 in Schnittdarstellung gemäß Schnitt IV-IV von Fig.1.

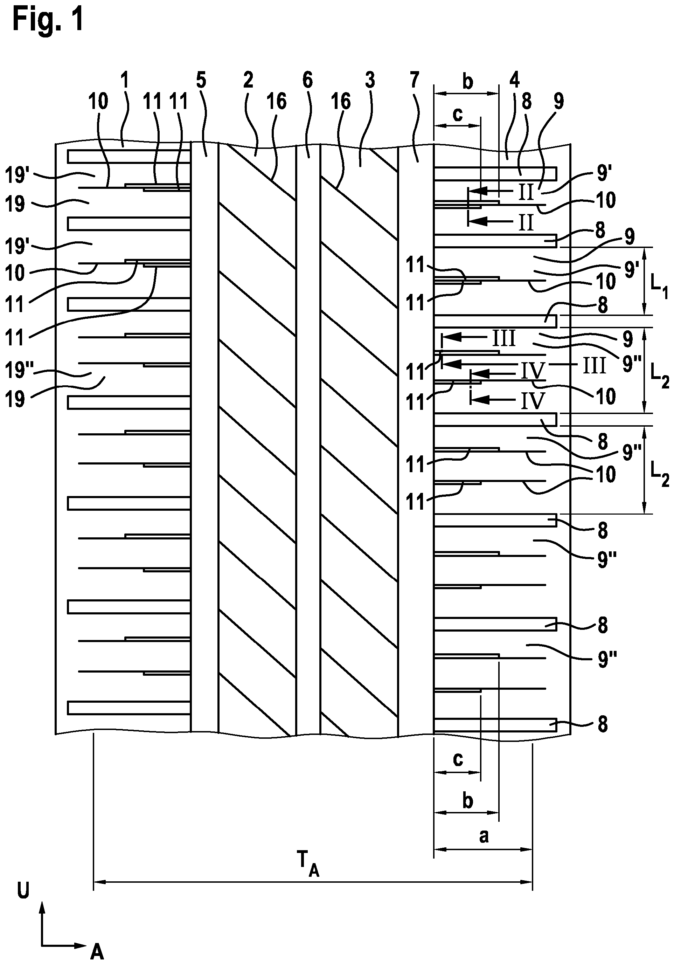

Fig.1 zeigt ein Laufstreifenprofil des Fahrzeugluftreifens eines Personenkraftwagens (Pkw), bei dem eine Profilblockreihe 1, eine Umfangsrippe 2, eine Umfangsrippe 3 und eine Profilblockreihe 4 bekannter Art in axialer Richtung A des Fahrzeugluftreifens nebeneinander angeordnet sind. Die Profilblockreihen 1 und 4 sowie die Umfangsrippen 2 und 3 erstrecken sich über den gesamten Umfang des Fahrzeugluftreifens und sind in Umfangsrichtung U des Fahrzeugluftreifens ausgerichtet. Die Profilblockreihe 1 ist dabei im Bereich der einen Reifenschulter als Schulterprofilblockreihe ausgebildet. Die Profilblockreihe 4 ist im Bereich der anderen Reifenschulter als Schulterprofilblockreihe ausgebildet. Die beiden Umfangsrippen 2 und 3 sind in axialer Richtung A zwischen den beiden Profilblockreihen 1 und 4 angeordnet. Die Profilblockreihe 1 und die Umfangsrippe 2 sind in axialer Richtung A in bekannter Weise durch eine über den gesamten Umfang des Fahrzeugluftreifens erstreckte und in Umfangsrichtung U ausgerichtete Umfangsrille 5 voneinander getrennt. Die Umfangsrippe 2 und die Umfangsrippe 3 sind in axialer Richtung A in bekannter Weise durch eine über den gesamten Umfang des Fahrzeugluftreifens erstreckte und in Umfangsrichtung U ausgerichtete Umfangsrille 6 voneinander getrennt. Die Umfangsrippe 3 und die Profilblockreihe 4 sind in axialer Richtung A in bekannter Weise durch eine über den gesamten Umfang des Fahrzeugluftreifens erstreckte und in Umfangrichtung U ausgerichtete Umfangsrille 7 axial voneinander getrennt.

Wie in Fig.1 dargestellt ist, erstreckt sich die Bodenaufstandsbreite T_{A} aus dem axialen Erstreckungsbereich der Profilblockreihe 1 bis in den axialen Erstreckungsbereich der Profilblockreihe 4. Die Bodenaufstandsbreite T_{A} ist die Breite des bodenberührende Teil des Laufstreifen, welche dem statisch ermittelten Footprint gemäß E.T.R.T.O.-Standards (Last bei 70 % der Tragfähigkeit bei einem Innendruck von 2,5 bar, Innendruck 85 % von 2,5 bar) entspricht.

Die Umfangsrippen 2 und 3 sind in bekannter Weise mit in Umfangsrichtung U hintereinander angeordneten, schräg verlaufenden Feineinschnitten 16 ausgebildet. Die Feineinschnitte 16 der Umfangsrippe 2 erstrecken sich dabei in axialer Richtung A ausgehend von der Umfangsrille 5 bis zur Umfangsrille 6. Die Feineinschnitte 16 der Umfangsrippe 3 erstrecken sich in axialer Richtung A ausgehend von der Umfangsrille 6 bis zur Umfangsrille 7.

Die Profilblockreihen 1 und 4 sowie die Umfangsrippen 2 und 3 sind in radialer Richtung R des Fahrzeugluftreifens nach außen hin mit einer innerhalb der Bodenaufstandsbreite T_{A} die Bodenkontaktfläche bildenden radial äußeren Oberfläche 15 ausgebildet.

Die Profilblockreihe 4 ist in bekannter Weise aus über den Umfang des Fahrzeugluftreifens verteiltwn, in Umfangsrichtung U hintereinander angeordneten Profilblockelementen 9 ausgebildet, welche jeweils in Umfangsrichtung U durch Querrillen 8 voneinander getrennt sind. Dabei erstrecken sich die Querrillen 8 ausgehend von der Umfangsrille 7 über den gesamten axialen Erstreckungsabschnitt der Profilblockreihe 4 bis in eine Position außerhalb der Bodenaufstandsbreite T_{A}. In analoger Weise ist die Profilblockreihe 1 aus über den Umfang des Fahrzeugluftreifens verteilten, in Umfangsrichtung U hintereinander angeordneten Profilblockelementen 19 ausgebildet, welche jeweils durch Querrillen voneinander getrennt werden. Diese Querrillen erstrecken sich dabei in axialer Richtung A ausgehend von der Umfangsrille 5 durch die Profilblockreihe 1 hindurch bis in eine Position außerhalb der Bodenaufstandsbreite T_{A}.

Wie am Beispiel der Profilblockreihe 4 darstellt ist, sind die beiden Profilblockreihen 1 und 4 dabei jeweils über den Umfang des Fahrzeugluftreifens verteilt aus unterschiedlich langen Profilblockelementen 9 bzw. 19 ausgebildet. Dies wird im Folgenden anhand der Profilblockreihe 4 näher erläutert.

Die Profilblockreihe 4 ist mit Profilblockelementen 9 ausgebildet. Dabei sind einige der Profilblockelemente 9 mit einer kürzeren in Umfangsrichtung U gemessenen Erstreckungslänge L₁ als kurze Profilblockelemente 9' und die anderen Profilblockelemente als mit einer größeren in Umfangsrichtung U des Fahrzeugluftreifens gemessenen Erstreckungslänge L₂ als lange Profilblockelemente 9" ausgebildet.

Die Längen L₁ bzw. L₂ werden dabei in der radial äußeren Oberfläche 15 der Profilblockreihe 4 an deren Schnittkante zur Umfangsrille 7 gemessen. Die kurzen Profilblockelemente 9' und die langen Profilblockelemente 9" sind dabei gemäß einer für den jeweiligen Fahrzeugluftreifen in bekannter Weise optimierten Pitchfolgen-Variation über den Umfang des Reifens hintereinander verteilt angeordnet.

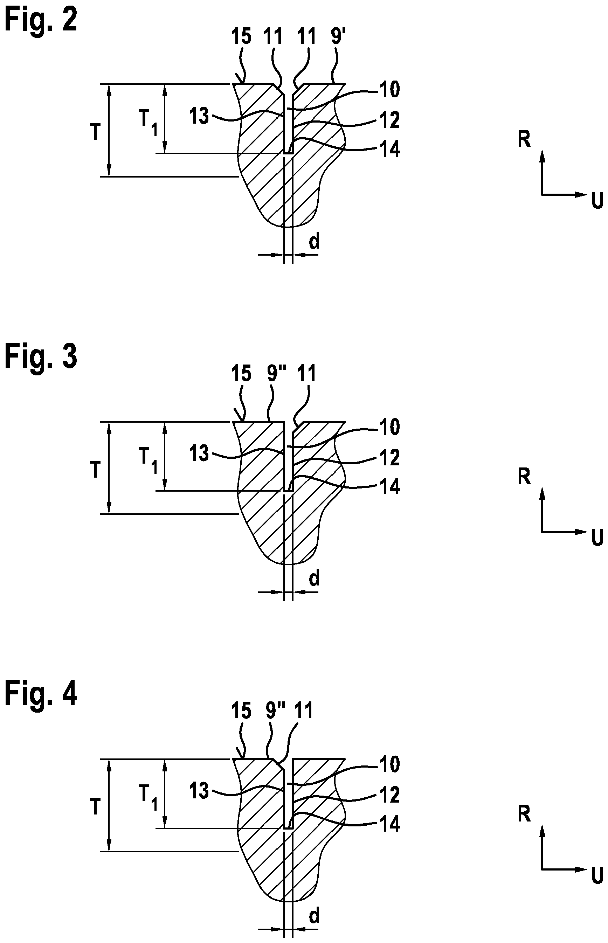

Wie in den Figuren 1 bis 4 zu erkennen ist, ist dabei in jedem kurzen Profilblockelement 9' jeweils ein Feineinschnitt 10 ausgebildet, welcher sich in axialer Richtung A parallel zur Querrille 8 ausgehend von der Umfangsrille 7 bis in eine Position außerhalb der Bodenaufstandsbreite T_{A} erstreckt. Der Feineinschnitt 10 wird - wie in Fig.1 und Fig.2 dargestellt ist - dabei in radialer Richtung R nach innen hin durch einen Feineinschnittsgrund 14 begrenzt und beiderseits des Feineinschnittsgrunds 14 von jeweils einer Feineinschnittswand 12 bzw. 13, welche sich ausgehend vom Feineinschnittsgrund 9 in radialer Richtung R nach außen bis zur radial äußeren Oberfläche 15 erstreckt. Der Feineinschnitt 14 ist mit einer Tiefe T₁ ausgebildet, welche kleiner ist als die in der Umfangsrille 7 ausgebildete Profiltiefe T. Die beiden Feineinschnittswände 12 und 13 begrenzen den Feineinschnitt 10 beiderseits des Feineinschnittsgrundes 14 in Umfangsrichtung U.

Die längeren Profilblockelemente 9" sind längs ihrer Umfangserstreckung mit zwei in Umfangsrichtung U hintereinander angeordneten derartigen Feineinschnitten 10 ausgebildet, die in ihrer Ausbildung der oben beschriebenen Ausbildung der Feineinschnitte 10 entsprechen und in den Figuren 1, 3 und 4 dargestellt sind.

Wie in Figur 1 und 2 zu erkennen ist, ist der Feineinschnitt 10 der kurzen Profilblockelemente 9' jeweils in seinem radial äußeren Erstreckungsabschnitt der beiden, den Feineinschnitt 10 begrenzenden Feineinschnittswände 12 und 13 im Übergang zur radial äußeren Oberfläche 15 mit einer Fase 11 ausgebildet. Wie in Figur 1 zu erkennen ist, ist dabei die an der Feineinschnittswand 13 ausgebildete Fase 11 ausgehend von der Umfangsrille 7 längs der Erstreckung des Feineinschnitts 10 bis in einen Abstand c von der Umfangsrille 7 erstreckt ausgebildet. Die Fase 11, die an der Feineinschnittswand 12 ausgebildet ist, erstreckt sich ebenfalls ausgehend von der Umfangsrille 7 längs der Erstreckung des Feineinschnitts 10 bis in einen Abstand b von der Umfangsrille 7 und endet dort. Dabei ist c < b < a ausgebildet, wobei a den axialen Erstreckungsabstand zwischen Umfangsrille 7 und dem axialen Erstreckungsende der Bodenaufstandsbreite T_{A} in der Profilblockreihe 4 angibt.

In der Darstellung der Figuren 1 bis 4 ist jeweils die Feineinschnittswand 13 diejenige Feineinschnittswand, welche in der in Figur 1 gezeigten Darstellung den jeweiligen Feineinschnitt 10 in der nach unten hin weisend dargestellten Orientierung der Umfangsrichtung U begrenzt und der Feineinschnitt 12 diejenige Feineinschnittswand, die den Feineinschnitt 10 in der nach oben weisend dargestellten Orientierung der Umfangsrichtung U begrenzt.

Wie in Figur 1 und 3 dargestellt ist, ist der in der Darstellung von Figur 1 jeweils der nach oben hin dargestellten Orientierung der Umfangsrichtung angeordnete Feineinschnitt 10 der beiden Feineinschnitte des langen Profilblockelementes 9" jeweils an seiner Feineinschnittswand 12 im Übergang zur radial äußeren Oberfläche 15 mit einer Fase 11 erstreckt ausgebildet, welche sich ausgehend von der Umfangsrille 7 längs der Erstreckung des Feineinschnittes 10 bis in den Abstand b von der Umfangsrille erstreckt und dort endet. Die Feineinschnittswand 13 dieses Feineinschnittes 10 ist jedoch fasenfrei ausgebildet.

Wie in Figur 1 und Figur 4 zu erkennen ist, ist der in der Darstellung von Figur 1 jeweils der nach unten hin dargestellten Orientierung der Umfangsrichtung U angeordnete Feineinschnitt 10 der beiden Feineinschnitte des langen Profilblockelementes 9" jeweils an seiner Feineinschnittswand 13 im Übergang zur radial äußeren Oberfläche 15 mit einer Fase 11 erstreckt ausgebildet, welche sich ausgehend von der Umfangsrille 7 längs der Erstreckung des Feineinschnittes 10 bis in den Abstand c von der Umfangsrille erstreckt und dort endet. Die Feineinschnittswand 12 dieses Feineinschnittes 10 ist jedoch fasenfrei ausgebildet.

Auf diese Weise ist in den längeren Profilblockelementen 9" jeweils an den beiden in Umfangrichtung vom Paar von Feineinschnitten 10 weg weisenden Seiten eine das Paar in Umfangsrichtung U nach außen hin begrenzende Fase 11 ausgebildet, und zwischen den beiden Feineinschnitten 10 selbst ist keine Fase 11 ausgebildet.

Wie in den Figuren 2 bis 4 zu erkennen ist, ist der Feineinschnitt 10 jeweils ausgehend von seinem Feineinschnittsgrund 14 nach radial außen hin mit einer Feineinschnittsdicke d ausgebildet, die den Abstand zwischen den beiden Feineinschnittswänden 12 und 13 in dem frei von Fasen ausgebildeten Erstreckungsabschnitt des Feineinschnittes 10 darstellt.

In analoger Weise sind in der Profilblockreihe 1 die Profilblockelemente 19 mit unterschiedlichen Erstreckungslängen L₁ und L₂ ausgebildet. Dabei sind die mit längerer Erstreckungslänge L₂ ausgebildeten Profilblockelemente 19 als lange Profilblockelemente 19" mit zwei Feineinschnitten 10 und die mit einer kürzeren Erstreckungslänge L₁ ausgebildeten Profilblockelemente 19 als kurze Profilblockelemente 19' mit lediglich einem Feineinschnitt 10 ausgebildet. Für die Feineinschnitte 10 sowie deren Fasenausbildung 11 gilt das bereits im Zusammenhang mit der Profilblockreihe 4 beschriebene in analoger Weise.

Die Feineinschnitte 10 sind dabei mit einer Breite d mit 0,5 mm ≤ d ≤ 0,8 mm und mit einer Tiefe T₁ mit 5 mm ≤ T₁ ≤ 9 mm ausgebildet.

Die Querrillen 8 sind mit einer in der radial äußeren Oberfläche 15 gemessenen Breite ausgebildet, die mit 2 mm bis 4 mm gewählt ist und mit einer Tiefe, die mit 5 bis 9 mm gewählt ist.

Die Tiefe T der Umfangsrille 7 bzw. 5 ist mit 5mm ≤ T ≤ 25mm ausgebildet. Beim Einsatz an üblichen PKW-Reifen ist T beispielsweise mit 6mm ≤ T ≤ 8mm ausgebildet

Die Fasen 11 sind in den Schnittebenen senkrecht zur Erstreckungsrichtung der Feineinschnitte 10 unter Einschluss eines Neigungswinkels von 45° zur radialen Richtung R ausgebildet und mit einer von der radial äußeren Oberfläche 15 nach innen hin gemessenen Tiefe von ca. 1 mm ausgebildet.

Der Abstand der beiden Feineinschnitte 10 eines langen Profilblockelementes 9" ist mit 5 mm bis zu 15 mm in Abhängigkeit von der Profilblocklänge gewählt ausgebildet. Der Abstand eines Feineinschnittes 10 zum nächstliegenden Feineinschnitt 10 eines Profilblockelementes 9" bzw. 19" ist mit 5mm bis 15 mm - beispielsweise mit 10 mm gewählt.

### Bezugszeichenliste

### (Teil der Beschreibung)

- 1: Profilblockreihe
- 2: Profilrippe
- 3: Profilrippe
- 4: Profilblockreihe
- 5: Umfangsrille
- 6: Umfangsrille
- 7: Umfangsrille
- 8: Querrille
- 9: Blockelement
- 10: Feineinschnittt
- 11: Fase
- 12: Einschnittwand
- 13: Einschnittwand
- 14: Einschnittgrund
- 15: Radial äußere Oberfläche
- 16: Feineinschnitt
- 17:
- 18:
- 19: Blockelement

## Patentansprüche

1. Laufstreifenprofil eines Fahrzeugreifens - insbesondere eines PKW-Fahrzeugreifens - mit wenigstens einem Profilband (4) - insbesondere einer Profilblockreihe - mit durch Quer- oder Schrägrillen (8) begrenzten und in Umfangsrichtung U hintereinander angeordneten, erhabenen Profilelementen (9), wobei in Profilelementen (9) des Profilbandes (4) über den Umfang des Reifens hinweg hintereinander angeordnete, quer verlaufende Feineinschnitte (10) ausgebildet sind, die jeweils von zwei Feineinschnittswänden (12,13) begrenzt werden, mit Feineinschnittswänden (12,13), die im Übergang zu der das Profilband (4) in radialer Richtung R nach außen begrenzenden Oberfläche (15) mit einer Fase (11) ausgebildet sind,
wobei das Profilband (4) unter Variation der Pitchlängen des Laufstreifenprofils mit Profilelementen (9',9") unterschiedlicher, in Umfangsrichtung U gemessenen Blocklängen (L₁,L₂) ausgebildet sind,
**dadurch gekennzeichnet,**
**dass in Profilelementen (9") größerer Blocklänge (L₂) eine größere Zahl derartiger Feineinschnitte (10) ausgebildet sind als in Profilelementen (9') kleinerer Blocklänge (L₁), und**
**dass** die Profilelemente (9',9") des Profilbandes (4) unabhängig von ihrer Blocklänge (L₁,L₂) jeweils mit einer gleichen Zahl von Feineinschnittswänden (12,13) ausgebildet sind, an denen eine Fase (11) ausgebildet ist.

2. Laufstreifenprofil gemäß den Merkmalen von Anspruch 1,
wobei das Profilband (4) eine Profilblockreihe - insbesondere eine Schulterprofilblockreihe - ist und die durch die Quer- oder Schrägrillen (8) begrenzten Profilelemente (9) Profilblockelemente sind.

3. Laufstreifenprofil gemäß den Merkmalen von Anspruch 1 oder 2,
wobei das Profilband (4) mit Profilelementen (9') kürzerer Blocklänge (L₁), in denen jeweils ein einziger derartiger Feineinschnitt (10) ausgebildet ist, und mit Profilelementen (9") größerer Blocklänge (L₂), in denen jeweils zwei derartige Feineinschnitte (10) ausgebildet sind,
wobei bei dem Feineinschnitt (10) der kürzeren Profilelemente(9') jeweils an beiden Feineinschnittswänden (12,13) eine Fase (11) und bei den beiden Feineinschnitten (10) der längeren Profilelemente (9") jeweils an einer Feineinschnittswand (12,13) eine Fase (11) und die andere Feineinschnittswand (13,12) fasenfrei ausgebildet ist.

4. Laufstreifenprofil gemäß den Merkmalen von Anspruch 3,
wobei bei dem einen der beiden Feineinschnitten (10) der längeren Profilelemente (9"), eine Feineinschnittwand (12) mit einer Fase (11) ausgebildet ist, die den Feineinschnitt (10) zur einen Umfangsrichtung U hin begrenzt, und bei dem anderen Feineinschnitt (10), diejenige Feineinschnittswand (13) mit einer Fase (11) ausgebildet ist, die den Feineinschnitt (10) in die entgegengesetzte Umfangsrichtung U hin begrenzt.

5. Laufstreifenprofil gemäß den Merkmalen von Anspruch 4,
wobei die beiden mit Fase (11) ausgebildeten Feineinschnittswände (12,13) das Paar von Feineinschnitten (10) jeweils in Umfangsrichtung U nach außen hin begrenzen, so dass die beiden fasenfreien Feineinschnittswände (13,12) der beiden Feineinschnitte (10) zwischen den beiden mit Fase (11) ausgebildeten Feineinschnittwänden (13,12) positioniert sind.

6. Laufstreifenprofil gemäß den Merkmalen von einem oder mehreren der vorangegangenen Ansprüche,
wobei sowohl in den kurzen Profilelementen (9') als auch in den langen Profilelementen (9") die in dem jeweiligen Profilelement (9',9") ausgebildeten Fasen (11) der Feineinschnittswände (12,13) jeweils mit unterschiedlicher, in axialer Richtung A gemessenen Erstreckungslänge (b,c) ausgebildet sind.

7. Laufstreifenprofil gemäß den Merkmalen von einem oder mehreren der vorangegangenen Ansprüche,
wobei die Feineinschnitte (10) innerhalb der Bodenaufstandsbreite T_{A} des Fahrzeugreifens sich jeweils ausgehend von einer das Profilband (4) begrenzenden Umfangsrille (7) in axialer Richtung A durch das Profilelement (9',9") hindurch erstrecken, wobei die Fase (11) einer Feineinschnittswand (12,13) jeweils ausgehend von dieser Umfangsrille (7) längs der Erstreckung des jeweiligen Feineinschnittes (10) erstreckt ausgebildet ist und mit Abstand zu dem von dieser Umfangsrille (7) wegweisenden Erstreckungsende des Feineinschnitts (10) endet.

## Claims

1. Tread profile of a vehicle tyre - in particular a car tyre - having at least one profile band (4) - in particular a row of profile blocks - with elevated profile elements (9) which are delimited by transverse or oblique channels (8) and are arranged one behind the other in the circumferential direction U, wherein transversely running sipes (10), which are in each case delimited by two sipe walls (12, 13) and are arranged one behind the other over the circumference of the tyre, are formed in profile elements (9) of the profile band (4), with sipe walls (12, 13) which are formed with a bevel (11) at the transition to the surface (15) delimiting the profile band (4) outwardly in the radial direction R, wherein, with variation of the pitch lengths of the tread profile, the profile band (4) is formed with profile elements (9', 9") of different block lengths (L₁, L₂) measured in the circumferential direction U,
**characterized**
**in that** a greater number of such sipes (10) are formed in profile elements (9") of greater block length (L₂) than in profile elements (9') of smaller block length (L₁), and
**in that**, irrespective of their block length (L₁, L₂), the profile elements (9', 9") of the profile band (4) are formed in each case with an equal number of sipe walls (12, 13) on which a bevel (11) is formed.

2. Tread profile according to the features of Claim 1, wherein the profile band (4) is a row of profile blocks - in particular a row of shoulder profile blocks - and the profile elements (9) delimited by the transverse or oblique channels (8) are profile block elements.

3. Tread profile according to the features of Claim 1 or 2,
wherein the profile band (4) with profile elements (9') of shorter block length (L₁), in which a single such sipe (10) is formed in each case, and with profile elements (9") of greater block length (L₂), in which two such sipes (10) are formed in each case, wherein in the case of the sipe (10) of the shorter profile elements (9') in each case a bevel (11) is formed on both sipe walls (12, 13) and in the case of the two sipes (10) of the longer profile elements (9") in each case a bevel (11) is formed on one sipe wall (12, 13) and the other sipe wall (13, 12) is bevel-free.

4. Tread profile according to the features of Claim 3, wherein, in the case of one of the two sipes (10) of the longer profile elements (9"), one sipe wall (12), which delimits the sipe (10) in one circumferential direction U, is formed with a bevel (11) and, in the case of the other sipe (10), the sipe wall (13) that delimits the sipe (10) in the opposite circumferential direction U is formed with a bevel (11).

5. Tread profile according to the features of Claim 4, wherein the two sipe walls (12, 13) formed with a bevel (11) respectively delimit the pair of sipes (10) outwardly in the circumferential direction U, so that the two bevel-free sipe walls (13, 12) of the two sipes (10) are positioned between the two sipe walls (13, 12) formed with a bevel (11).

6. Tread profile according to the features of one or more of the preceding claims,
wherein, both in the short profile elements (9') and in the long profile elements (9"), the bevels (11) of the sipe walls (12, 13) that are formed in the respective profile element (9', 9") are respectively formed with a different length of extent (b, c),
measured in the axial direction A.

7. Tread profile according to the features of one or more of the preceding claims,
wherein, within the ground contact width T_{A} of the vehicle tyre, the sipes (10) extend in the axial direction A through the profile element (9', 9") in each case from a circumferential groove (7) delimiting the profile band (4), wherein the bevel (11) of a sipe wall (12, 13) is formed so as to extend in each case from the circumferential groove (7) along the extent of the respective sipe (10) and ends at a distance from the end of the extent of the sipe (10) remote from this circumferential groove (7).

## Revendications

1. Profilé de bande de roulement d'un pneumatique de véhicule, en particulier d'un pneumatique de voiture, ledit profilé comprenant au moins une bande de roulement (4), en particulier une rangée de blocs de profilé, des éléments de profilé (9) en relief délimités par des rainures transversales ou obliques (8) et disposés les uns derrière les autres dans la direction circonférentielle U, de fines incisions (10) étant formées dans des éléments de profilé (9) de la bande de profilé (4), lesquelles s'étendent transversalement, sont disposées les unes derrière les autres dans la direction de la circonférence du pneumatique et sont chacune délimitées par deux parois d'incision fine (12, 13), des parois d'incision fine (12, 13) qui sont formées avec un chanfrein (11) dans la transition vers la surface (15) délimitant vers l'extérieur la bande de profilé (4) dans la direction radiale R,
la bande de profilé (4) étant formée avec des éléments de profilé (9', 9") de différentes longueurs de bloc (L₁, L₂) mesurées dans la direction circonférentielle U par variation des longueurs de pas du profilé de bande de roulement,
**caractérisé en ce que**
un plus grand nombre de ces fines incisions (10) est formé dans des éléments de profilé (9") de plus grande longueur de bloc (L₂) que dans des éléments de profilé (9') de plus petite longueur de bloc (L₁), et
les éléments de profilé (9', 9") de la bande de profilé (4) sont chacun formés avec un même nombre de parois d'incision fine (12, 13), sur lesquelles un chanfrein (11) est formé, indépendamment de leur longueur de bloc (L₁, L₂).

2. Profilé de bande de roulement selon les caractéristiques de la revendication 1,
la bande de profilé (4) étant une rangée de blocs de profilé, en particulier une rangée de blocs de profilé d'épaulement, et les éléments de profilé (9), délimités par les rainures transversales ou obliques (8), étant des éléments de bloc de profilé.

3. Profilé de bande de roulement selon les caractéristiques de la revendication 1 ou 2,
la bande de profilé (4) avec des éléments de profilé (9') de plus courte longueur de bloc (L₁), dans chacun desquels une seule incision fine (10) est formée, et avec des éléments de profilé (9") de plus grande Longueur de bloc (L₂), dans chacun desquels deux incisions fines (10) sont formées,
l'incision fine (10) des éléments de profilé plus courts (9') comportant un chanfrein (11) sur chacune des deux parois d'incision fine (12, 13) et les deux incisions fines (10) des éléments de profilé plus longs (9") comportant chacune un chanfrein (11) sur une paroi d'incision fine (12, 13) et l'autre paroi d'incision fine (13, 12) étant formée sans chanfrein.

4. Profilé de bande de roulement selon les caractéristiques de la revendication 3,
dans l'une des deux incisions fines (10) des éléments de profilé plus longs (9"), une paroi d'incision fine (12) étant formée avec un chanfrein (11) qui délimite l'incision fine (10) dans une direction circonférentielle U, et dans l'autre incision fine (10) la paroi d'incision fine (13), qui délimite l'incision fine (10) dans la direction circonférentielle opposée U, étant formée avec un chanfrein (11).

5. Profilé de bande de roulement selon les caractéristiques de la revendication 4,
les deux parois d'incision fine (12, 13) formées avec le chanfrein (11) délimitant la paire d'incisions fines (10) vers l'extérieur dans la direction circonférentielle U de sorte que les deux parois d'incision fine (13, 12) sans chanfrein des deux incisions fines (10) sont positionnées entre les deux parois d'incision fine (13, 12) formées avec un chanfrein (11).

6. Profilé de bande de roulement selon les caractéristiques d'une ou plusieurs des revendications précédentes,
aussi bien dans les éléments de profilé courts (9') que dans les éléments de profilé longs (9"), les chanfreins (11), formés dans l'élément de profilé respectif (9', 9"), des parois d'incision fine (12, 13) étant formés chacun avec des longueurs d'extension (b, c) différentes mesurées dans la direction axiale A.

7. Profilé de bande de roulement selon les caractéristiques d'une ou plusieurs des revendications précédentes,
les incisions fines (10) situées dans la largeur de contact au sol T_{A} du pneumatique de véhicule s'étendant chacune depuis une rainure circonférentielle (7), délimitant la bande de profilé (4), dans la direction axiale A à travers l'élément de profilé (9', 9"), le chanfrein (11) d'une paroi d'incision fine (12, 13) étant formé de manière à s'étendre depuis cette rainure circonférentielle (7) le long de l'extension de l'incision fine respective (10) et se terminant à distance de l'extrémité d'extension de l'incision fine (10) pointant à l'opposé de cette rainure circonférentielle (7).
